# EUROPEAN PATENT SPECIFICATION

(11) **EP 3 600 924 B1**
(45) Date of publication and mention of the grant of the patent: **26.05.2021**
(21) Application number: 18714355.7
(22) Date of filing: 20.03.2018
(51) Int. Cl.: B60G 17/015

(54) **VEHICLE SUSPENSION SYSTEM**
FAHRZEUGAUFHÄNGUNGSSYSTEM
SYSTÈME DE SUSPENSION DE VÉHICULE

(30) Priority: 20.03.2017 GB 201704415
(43) Date of publication of application: 05.02.2020
(73) Proprietor: Imperial College Innovations Limited, London SW7 2AZ (GB)
(72) Inventor: EVANGELOU, Simos, London Greater London SW7 2AZ (GB); DINI, Daniele, London Greater London SW7 2AZ (GB); CLEAVER, George, London Greater London SW7 2AZ (GB); REMIREZ, Carlos Arana, London Greater London SW7 2AZ (GB)
(74) Representative: Grey, Ian Michael
(86) International application number: PCT/GB2018/050722
(87) International publication number: WO 2018/172762

(56) References cited:
- EP-A1- 2 775 165
- DE-A1-102013 002 710
- JP-A- H03 227 714
- JP-A- 2002 218 778
- JP-A- 2007 153 271
- US-A1- 2002 116 104
- US-A1- 2007 284 840

## Description

This invention relates to a vehicle suspension system. It also relates to a vehicle that comprises such a system, to a control system for the vehicle and to a method of operating a vehicle suspension system according to the invention.

Suspension systems are provided in existing vehicles to at least partly isolate a suspended mass of the vehicle from irregularities in the underlying surface on which the vehicle is to travel. Such isolation provides a smoother ride than would otherwise be the case for passengers that form part of the suspended mass. Existing suspension systems also aim to resist undesirable changes in attitude of the suspended part of the vehicle that tend to occur during acceleration, braking and during changes in the direction of travel. Such changes in attitude, sometimes referred to as "body pitch" and "body roll", are undesirable in reducing the comfort of passengers and also in reducing the performance of the vehicle, which, at exaggerated attitudes, may become unresponsive or unsafe.

Suspension systems can generally be separated into two categories: passive suspension and active suspension. Passive suspension systems typically comprise a force generating component such as a coil spring to support the weight of the vehicle and a damper to control the oscillatory response of the spring to irregularities in the underlying surface. In passive suspension systems, characteristics of the system, such as the spring and damper rates cannot be varied during operation. By contrast, in active suspension systems, some characteristics can be varied, usually in an attempt to avoid more completely the undesirable phenomena identified above. For example, in some active suspension systems, additional force can be supplied to augment or reduce the spring force and adjust the ride height of the vehicle. Such systems can be set up to reduce body roll and pitch, or even improve the ride comfort. One such system is described in WO2012/025705. JP 2007 153271 discloses likewise a suspension system for a vehicle comprising: a pivotable control arm having a first end connectable to a wheel carrier and a second end connectable to an inboard component of the vehicle;a rotary actuator; and a linkage connecting the rotary actuator to the control arm, so that torque applied to the linkage by the rotary actuator is translated into a force which acts on the control arm to pivot the control arm, and a wheel carrier connected to said first end, relative to said inboard component of the vehicle.

In other active suspension systems, which are perhaps more properly termed "semi-active suspension", the viscosity of fluid in dampers of the systems can be varied dynamically to change the damper rate, which is the damper force response to a rate of change in displacement. The damper rate affects the suspension system compliancy. For example, a low damper rate will reduce the force transmitted to the suspended mass by surface irregularities, but can lead to an undesirable oscillatory response of the system. The damper rate can be varied during operation of the vehicle to provide ride characteristics that adjust to account for changes in the operating conditions of the vehicle, for example, changes in the surface, the speed of the vehicle or whether or not the vehicle is cornering, accelerating or braking.

Though active and semi- active suspension has met with some success in improving the performance of suspension systems, such arrangements are generally complex and expensive, and can also be large and heavy. For example, the use of electro-hydraulic components to provide the suspension in active suspension systems results in high initial cost, significant energy consumption during use, high servicing cost and difficulty in packaging those components within the vehicle because of higher weight and larger size than their passive equivalents. Semi-active arrangements that use magnetorheological dampers have lower energy consumption during use, but do not have the force generating capability of fully active arrangements.

There is therefore a need to provide a suspension system that exhibits at least some of the advantages of active or semi-active suspension, but that avoids at least some of their drawbacks.

According to the invention there is provided a suspension system for a vehicle comprising: a pivotable control arm having a first end connectable to a wheel carrier and a second end connectable to an inboard component of the vehicle; a rotary actuator; and a linkage connecting the rotary actuator to the control arm, so that torque applied to the linkage by the rotary actuator is translated into a force which acts on the control arm to pivot the control arm, and a wheel carrier connected to said first end, relative to said inboard component of the vehicle; wherein the rotary actuator comprises an output shaft and the linkage comprises a torque transfer arm attached to the output shaft and a pushrod to connect the torque transfer arm to the control arm;wherein the rotary actuator comprises a housing mountable to an inboard component of the vehicle; and wherein the torque transfer arm comprises an axle rotatably mounted in the housing by a bearing located in the housing on either side of a slot in the housing, the torque transfer arm extending from said slot.

According to the invention the rotary actuator comprises an output shaft; the linkage comprising a torque transfer arm attached to the shaft, and a pushrod to connect the torque transfer arm to the control arm.

The push rod may have an upper end pivotally connected to the torque transfer arm and a lower end pivotally connected to the control arm.

The rotary actuator may comprise a drive motor and a gearbox, the gearbox being configured to cause a step change in the torque transmitted from the drive motor to the output shaft.

According to the invention the actuator further comprises a housing mountable to an inboard component of the vehicle.

According to the invention the torque transfer arm is rotatably mounted within the housing.

According to the invention the torque transfer arm comprises an axle rotatably supported by a bearing located in the housing.

According to the invention the torque transfer arm extends from a slot in the housing. The axle is rotatably supported by a bearing located in the housing on either side of the slot.

The suspension system may further comprise: a wheel carrier; and a telescopic strut having a top mount connectable at an upper end of the strut to an inboard component of the vehicle and a lower joint to connect a lower end of the strut to the wheel carrier; wherein a line between the top mount and the lower joint defines a steering axis of the wheel carrier.

The first end of the control arm may be connected to the wheel carrier.

The suspension system may further comprise a coil spring arranged coaxially around the telescopic strut.

The control arm may be a lower control arm, in which the system further comprises: a wheel carrier; an upper control arm having a first end connected to the wheel carrier and a second end connectable to an inboard component of the vehicle; and a telescopic strut having a lower joint to pivotally connect a lower end of the strut to the lower control arm and an upper end connectable to an inboard component of the vehicle.

The telescopic strut and the pushrod may share a common pivot axis about which both said strut and said pushrod can pivot relative to the lower control arm.

The suspension system may further comprise a coil spring arranged coaxially around the telescopic strut.

Also according to the invention there is provided a vehicle comprising a suspension system according to the invention.

According to a further aspect of the invention, there is provided a control system for a vehicle, the control system comprising a torque control unit and a torque control loop, wherein in response to receiving information relating to a state of the vehicle, the torque control unit is arranged to provide a torque reference to the torque control loop, the torque control loop being arranged to convert the torque reference into signals for driving the rotary actuator.

The torque control unit may be further arranged to receive information regarding a desired suspension condition and to calculate the torque reference based on the current attitude and the desired suspension condition. The desired suspension condition is for example a condition provided by the control unit to ensure road holding, or an input selected by the driver to achieve a desired ride quality.

According to a still further aspect, there is provided a method of operating a suspension system, comprising determining a torque reference based on a desired suspension condition and using the torque reference to calculate a torque to be applied to the linkage by the actuator.

The method may further comprise converting the torque reference to a current value for the actuator, wherein the actuator comprises a drive motor.

### Brief description of the drawings

Embodiments of the invention are described below by way of example only and with reference to the accompanying drawings in which:
Fig. 1 shows a suspension system according to a first embodiment of the invention;
Fig. 2 shows a rotary actuator and a linkage in accordance with the invention;
Fig. 3 is an exploded view of the rotary actuator and the linkage;
Fig. 4 is a first view of a suspension system according to a second embodiment of the invention;
Fig. 5 is a second view of the second embodiment;
Fig. 6 shows a suspension system according to a third embodiment of the invention;
Fig. 7 shows an overall structure of the control system according to the invention; and
Fig. 8 shows more detail of the control loops shown in the structure of Figure 7.

### Detailed description

The following describes a suspension system for a vehicle. Where used herein, the term 'inboard' refers to any component of the vehicle that is sprung, that is to say, any component that is suspended above the road surface by the suspension system. The term 'outboard', by contrast, refers to any component of the vehicle that is unsprung. Unsprung components move with the vehicle suspension system and, therefore, relative to the inboard components. It is a generally accepted principle of automotive design that the unsprung mass of a vehicle suspension system should be kept to a minimum so that displacement of the unsprung, outboard, components is more easily controlled. As will be explained in more detail hereafter, an advantage of the present invention is that the heaviest components of the system are mounted inboard and therefore do not contribute to the unsprung mass of the suspension system.

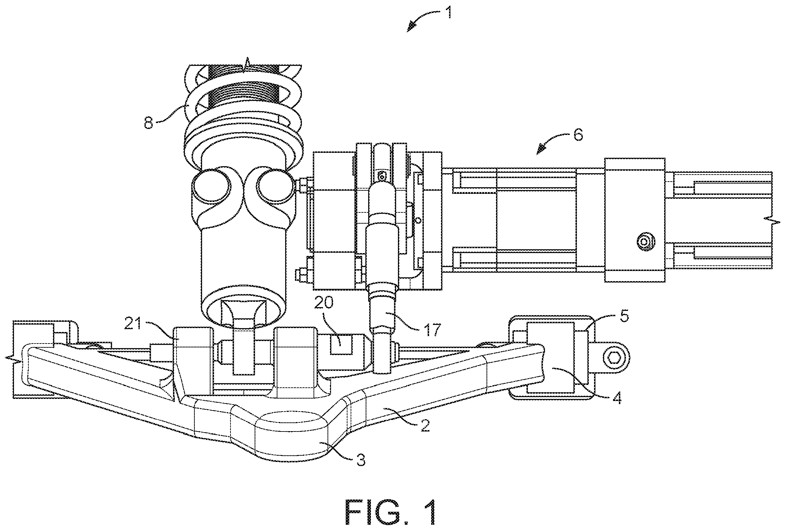

A first embodiment of a suspension system 1 for a vehicle is shown in Fig. 1. The suspension system 1 comprises at least one control arm 2 having a first end 3 connected to a wheel carrier (not shown) and a second end 4 pivotally connected to an inboard component of the vehicle 5 about axis A-A; a rotary actuator 6; and a linkage 15 connecting the rotary actuator to the control arm 2, so that torque applied to the linkage 15 by the rotary actuator 6 is translated into a force which acts on the control arm 2. The control arm 2, wheel carrier and linkage 15 are unsprung, while the actuator 6 forms part of the sprung mass of the vehicle.

The force applied by the linkage 15 can be used to change the position of the control arm 2, and therefore a wheel (not shown) mounted to the wheel carrier, about axis A-A as explained below.

The force applied by the linkage 15 to the control arm 2 acts in parallel with a conventional force generating component, such as a spring 8. The force applied by the linkage 15 may act in either a first or second direction. Specifically, when the actuator 6 applies a torque in a first rotational direction the force applied by the linkage 15 acts in the first direction to augment the force of the spring 8; and when the actuator 6 applies a torque in a second rotational direction the force applied by the linkage 15 acts in the second direction against the spring 8.

The actuator 6 may be controlled to improve both the high frequency and the low frequency performance of the suspension system. The high frequency performance relates to ride comfort, amongst other characteristics of suspension performance. Low frequency performance relates to vehicle attitude control, such as control of roll, pitch and heave for example.

When the actuator acts against the spring 8, the actuator 6 assists the displacement of the wheel. As an example, the actuator can displace the wheel in response to a bump. By doing so, the actuator 6 reduces the force transmitted by the spring 8 through the inboard components of the vehicle and to the passengers. This has the effect of improving ride comfort. One high frequency control option, with the object of improving ride comfort, is to apply a torque to the actuator 6 to keep the force exerted by the spring 8 on the inboard components of the vehicle near constant. This minimises the vertical acceleration of the inboard components and passengers of the vehicle.

In the same example, the actuator 6 may augment the force generated by the spring 8 to more quickly restore the wheel position following displacement. Such high frequency wheel articulation improves ride comfort over surface irregularities.

The actuator 6 may also act against or augment the spring 8 force to improve the low frequency performance of the suspension system. This may include changes to the ride height of the vehicle, for example to reduce roll or pitch, or to improve the aerodynamic performance of the vehicle. Ride height adjustment is even known to benefit vehicle crash worthiness, for example in anticipation of an imminent impact.

It shall be appreciated that by applying a force in parallel with the spring 8, the actuator 6 is not required to support the weight of the vehicle. In other words, if no torque is supplied by the actuator, the weight of the vehicle is still supported by the spring 8. This means that the present system is safer in the event of an actuator failure. This also means that the system is less power intensive as torque is only required when the vehicle is moving. As the weight of the vehicle is not supported by the actuator, a hydraulic system is not required and an electric actuator can be used in its place. Electric actuators are generally lighter, less complex and less expensive than hydraulic equivalents.

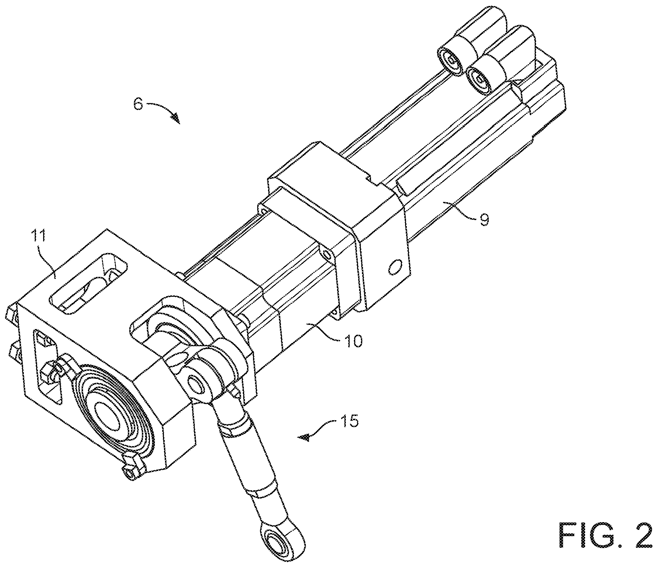

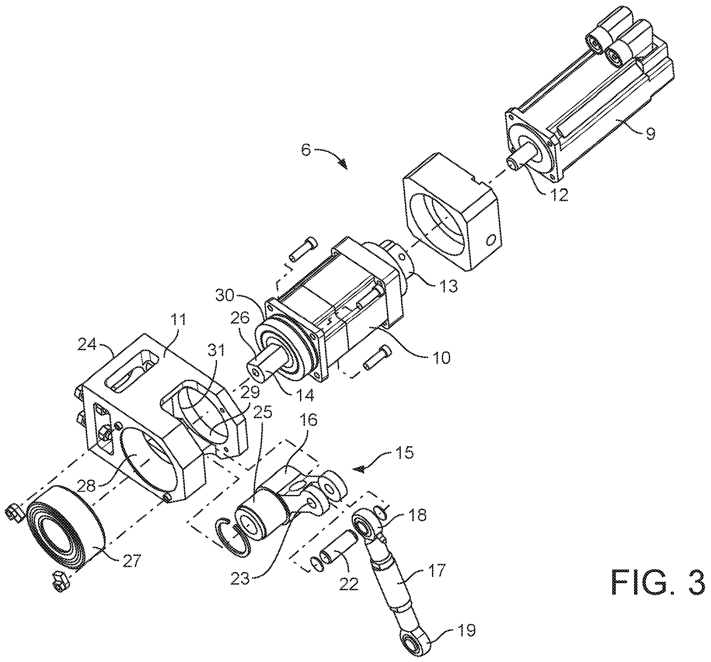

Features of the rotary actuator 6 and the linkage 15 will now be described with reference to Figs. 2 and 3.

The rotary actuator 6 comprises an electric drive motor 9, a gearbox 10 and a housing 11 for mounting the rotary actuator 6 to an inboard component of the vehicle. The drive motor 6 is, for example, a permanent-magnet synchronous motor PMSM.

By mounting the rotary actuator 6 to an inboard component of the vehicle, the weight of the rotary actuator 6 does not contribute to the unsprung mass of the suspension assembly as mentioned above.

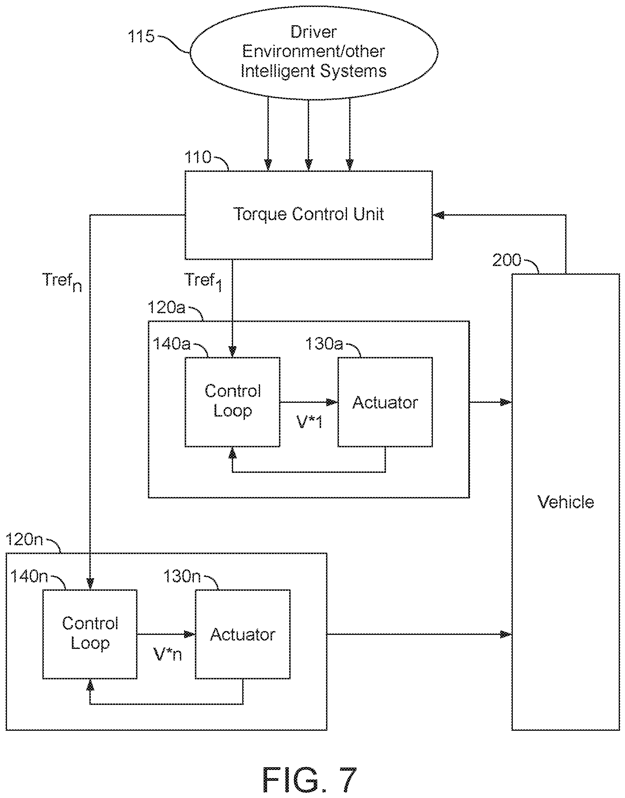

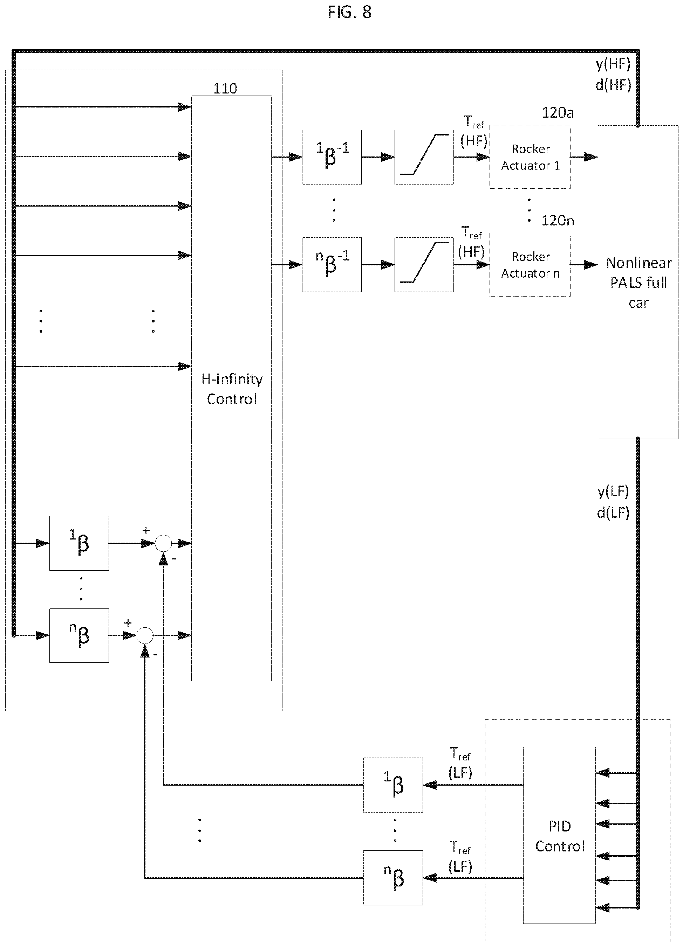

The drive motor 9 is configured to produce a torque in response to a control signal. The control signal is explained in more detail below with reference to Figs. 7 and 8.

The torque is output by a drive shaft 12 of the drive motor 9. The output shaft 12 is connected to an input shaft 13 of the gearbox 10 to transmit torque between the drive motor 9 and the gearbox 10. The drive shaft 12 and the gearbox input shaft 13 may be connected in any conventional way, such as, for example, by a splined coupling or by a keyway and key. The gearbox 10 comprises a single ratio and is configured to either step up or step down the torque generated by the drive motor 9 as required. Although the gearbox 10 comprises a single ratio, a multi ratio gearbox is not considered beyond the scope of the invention.

The gearbox 10 further comprises an output shaft 14 which couples to the linkage 15 as explained below. The torque at the output shaft 14 is a multiple of the torque generated by the drive motor 9 and the gear ratio of the gearbox 10. Therefore, by selection of the gear ratio and the drive motor 9; the torque delivered to the linkage 15, and therefore the force transmitted to the control arm 2, can be changed. This allows the system to be adapted easily for various applications, depending on, among other things, the weight and use of the vehicle.

The gearbox 10 is preferably a planetary gearbox so that the input shaft 13 and the output shaft 14 lie on a common axis, as illustrated by Figure 1. This allows the gearbox 10 and the drive motor 9 to be positioned in line with each other and up against the inboard component of the vehicle to which they are mounted. It will be appreciated that this inline arrangement of the gearbox 10 and the drive motor 9 reduces its width relative to, for example, a side by side configuration. The reduced width of the inline arrangement reduces the extent to which the drive motor 9 or the gearbox 10 of the rotary actuator 6 extend outwardly of said inboard component of the vehicle and, therefore, allows the control arm 2 greater articulation before it fouls the rotary actuator 6.

The linkage 15 comprises a torque transfer arm 16 which couples to the gearbox output shaft 14 so that rotation of the output shaft 14 rotates the torque transfer arm 16 through an arc. The linkage 15 also comprises a pushrod 17 to connect the torque transfer arm 16 to the control arm 2. The pushrod 17 is pivotally connected at an upper end 18 to the torque transfer arm 16 and at a lower end 19 to the control arm 2. The pivotal connections accommodate the changing geometry as the torque transfer arm 16 moves in response to a torque generated by the rotary actuator 6.

In the illustrated embodiments, the upper and lower ends 18, 19 of the pushrod 17 comprise a rose joint. At the lower end 19 the rose joint connects to an axle 20 (shown in Fig. 1) which extends through a bracket 21 of the control arm 2. The axle 20 pivotally attaches the rose joint to the bracket 21. At the upper end 18 the rose joint connects to a pin 22 which extends through a forked section 23 of the torque transfer arm 16. The pin 22 pivotally attaches the upper end 18 of the pushrod 17 to the forked section 23.

The rose joint of the upper end 18 of the pushrod 17 sits between two tines of the forked section 23 so that it is additionally supported longitudinally along the axis of pivot. This provides a stable and stiff pivotal connection between the torque transfer arm 16 and the pushrod 17.

The housing 11 comprises an inboard mounting face 24 which can be configured to correspond to the inboard component of the vehicle to which it is mounted. Any stable fixing method is envisaged, for example the mounting face can be seam welded to the vehicle, or attached by a threaded connection. The objective of the method of attachment is to provide the stiffest possible mounting and thereby minimise any change in position of the actuator 6 as torque is applied.

The torque transfer arm 16 is mounted within the housing 11. Therefore the torque transfer arm 16 can react directly against the housing 11 when the drive motor is activated. This efficiently directs the load caused by the torque reaction into the inboard component of the vehicle.

The torque transfer arm 16 comprises an axle 25 which is configured to connect to the output shaft 14 of the gearbox 10. The axle 25 and the output shaft 14 maybe connected in any conventional way. In the illustrated embodiment, the output shaft 14 comprises a key seat 26 in which a key (not shown) will be located to transfer torque between the output shaft 14 and a corresponding keyway (not shown) in the axle 25.

The forked section 23 of the torque transfer arm 16 extends radially from a first end of the axle. A second end of the axle 25 locates in a bearing 27 received in a first bearing seat 28 of the housing 11. The housing 11 further comprises a second bearing seat 29; the second bearing seat 29 accommodates an additional bearing 30 which supports the output shaft 14 of the gearbox 10. Therefore both the output shaft 14 and the torque transfer arm 16 are supported by the housing 11. The forked section 23 of the torque transfer arm 16 extends from a slot 31 in the housing 11 disposed in between the first and second bearing seats 28, 29.

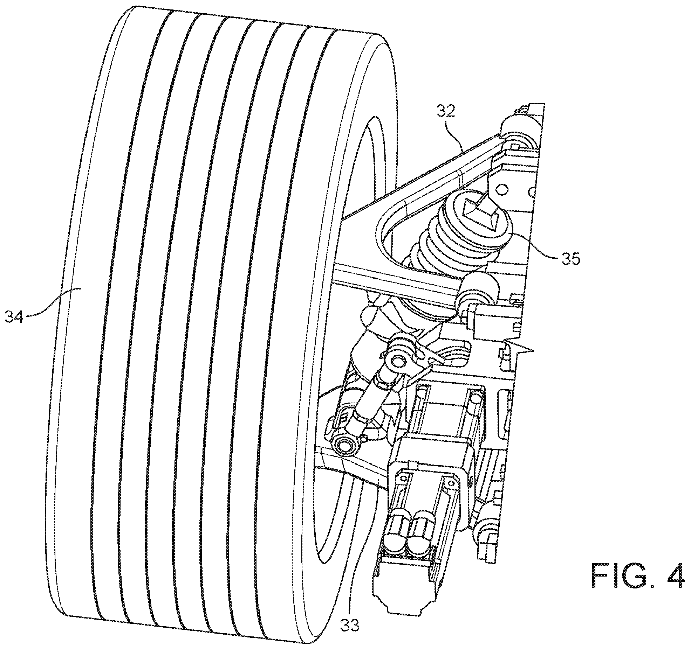

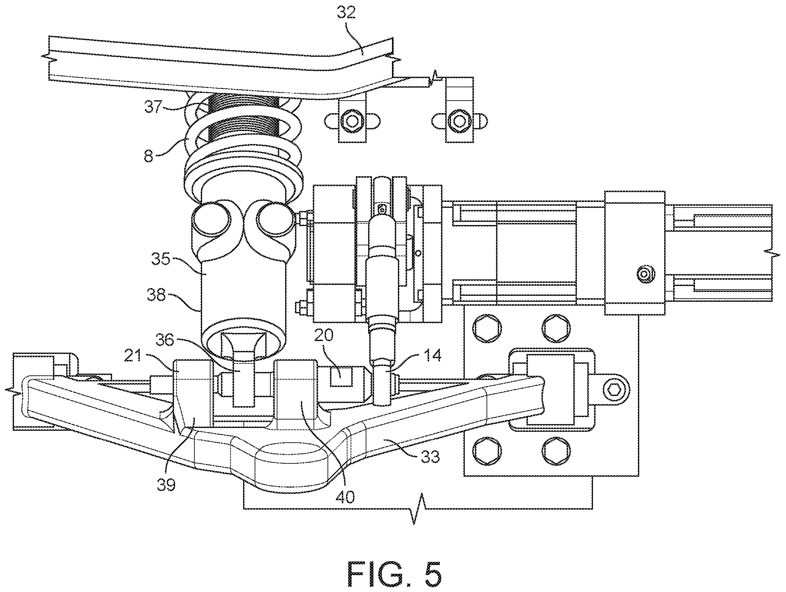

Figs. 4 and 5 show a second embodiment of the suspension system, wherein like features retain the same reference numbers. In this embodiment the suspension system uses a double wishbone type arrangement in which the control arm 2 is a lower control arm 33; which is lower relative to an upper control arm 32. Both the upper and lower control arms 32, 33 pivotally connect at respective first ends to a wheel carrier (not shown). Respective second ends of the upper and lower control arms 32, 33 are pivotally connected to an inboard component of the vehicle, such as a sub frame of the chassis.

A wheel 34 is mounted to the wheel carrier so that the wheel 34 is displaceable relative to the inboard components of the vehicle by articulation of the upper and lower control arms 32, 33. The wheel 34 may be mounted to the wheel carrier in any conventional way such as, for example, by mounting the wheel to a hub (not shown) rotatably received in a bearing (not shown) of the wheel carrier.

A telescopic strut 35 is pivotally mounted to the lower control arm 33 at a lower joint 36. In the illustrated embodiments the telescopic strut 35 is damper comprising an upper part 37 mounted to an inboard component of the vehicle and a lower part 38 mounted to the lower control arm 33. The upper part 37 of the damper 35 can slide within the lower part 38 to provide a telescopic damping action that allows the damper to extend and contract during articulation of the lower wishbone 33 in the normal way. The coil spring 8 is arranged coaxially over the damper 35 to urge the upper and lower parts 37, 38 of the damper apart and provide a force that at least partially supports the weight of the vehicle.

In this embodiment, the lower end 19 of the pushrod 17 is pivotally connected to the lower control arm 33, though it shall be appreciated that the pushrod 17 can be connected to the upper control arm 32 without departing from the scope of the invention.

Advantageously, the lower part 38 of the telescopic strut 35 is mounted to the axle 20 used to connect the lower end 19 of the push rod 17. Specifically, the bracket 21, provided on the lower control arm 33, comprises two lugs 39, 40, each having a bearing seat (not shown). The axle 20 extends through both lugs 39, 40 and is mounted in a bearing. Alternatively, each bearing seat provides a plain bearing surface and the axle 20 is mounted directly on the bearing seats.

In the illustrated embodiment, the lower part 38 of the telescopic strut 35 mounts to the axle 20 between the lugs 39, 40. A portion of the axle 20 extends from the bracket 21 and through the rose joint of the lower end 19 of the pushrod 17.

Therefore both the telescopic strut 35 and the pushrod 17 share a common pivot axis about which both can pivot relative to the lower control arm 33. Although it is not essential for the telescopic strut 35 and the pushrod 17 to share a common axis, it is preferable to ensure that the distance between axis A-A, about which the control arm 33 rotates relative to the inboard component of the vehicle to which it is mounted, and the point at which the lower end of the pushrod 17 is mounted to the control arm 33 is maximised to minimise the force required to rotatably drive the control arm 33.

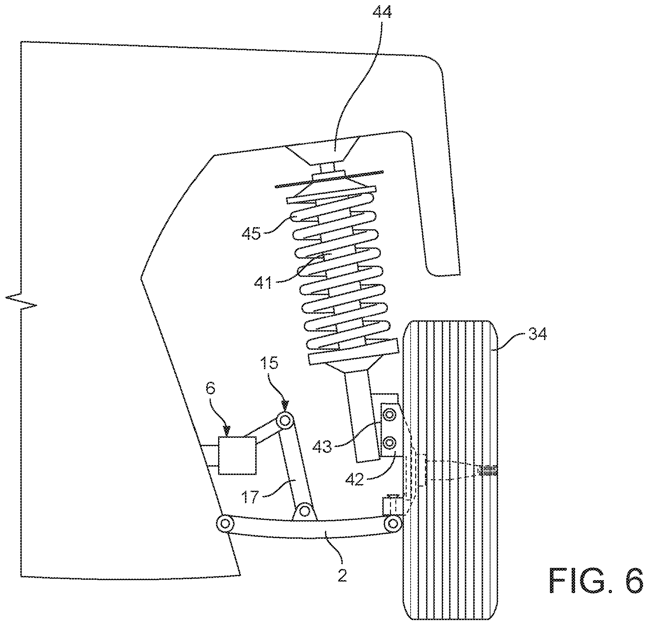

In a third embodiment of the invention, wherein like features retain the same reference numbers, the rotary actuator 6 and linkage 15 described above form part of a Macpherson strut suspension system, shown in Fig. 6. In this embodiment, the suspension system comprises a single control arm 2 and a telescopic strut 41 with coil over spring 45 connected directly to a wheel carrier 42 at a lower end by a lower joint 43. The telescopic strut 41 is mounted at an upper end to an inboard component of the vehicle by a top mount 44. In Macpherson strut suspension, a line drawn between the top mount and the lower joint defines a steering axis of the wheel 34.

It is conventional in active suspension systems to replace the top mount with an actuator to apply a force directly to the spring. In other words, the actuator and the spring act in series. Often activation of the actuator can cause a camber change as the angle of the steering axis relative to the horizontal is affected. A change in camber will in turn affect the contact patch of the wheel and the ground which, in most circumstances should not vary in order that the contact patch is not diminished.

It shall be appreciated that in the present invention, as the pushrod 17 acts directly on the control arm 2 and not the spring 45, as in known systems, there is no effect on suspension geometry other than the normal changes caused by compression of the spring 45. In other words, camber is unaffected.

The control scheme for the system will now be described below with reference to Figs. 7 to 9. In suspension systems such as that disclosed in WO2012/025705, the control scheme is based on generating a position reference for each torque transfer arm. In contrast, in the present application, rotation of the torque transfer arm is directly linked to the suspension deflection, so that position control would effectively neutralise the filtering properties of the passive spring damper. The control scheme according to embodiments of the present invention therefore uses torque control.

Referring to Figure 7, a control system 100 for the suspension system comprises a torque control unit 110 and a plurality of actuator units 120a - n. Each actuator unit 120a - n comprises an actuator 130a - n, which is located at each corner of a vehicle 200, and a control loop 140a - n which governs the motion of each individual actuator. Each actuator 130a - n comprises the drive motor 9 and gearbox 10, as described above.

The torque control unit 110 receives measurements from the vehicle 200 as well as inputs 115 from the driver, the environment and other intelligent systems on board the vehicle. The information may relate to the state of the vehicle and/or road ahead and may include, but is not limited to: heave, or vertical acceleration; pitch angle; pitch acceleration; roll angle; roll acceleration; wheel, or unsprung mass, vertical acceleration; wheel rotational speed; strut/damper/spring compression; vehicle position; vehicle forward speed; vehicle forward acceleration; vehicle lateral acceleration; yaw rate; pitch rate; roll rate; steering wheel angle; accelerator/brake pedal position; and road surface irregularities. Based on this information, control algorithms within the torque control unit 110 generate torque references Tref which are fed to the control loops 140a - n. The control algorithms are, for example, based on control techniques for providing attitude control, comfort, road holding and handling improvement, which are set out below. The torque references Tref can be directly translated into current references to be applied to the drive motor 9.

An example of the torque control unit 110 is shown in Fig. 8.

Referring to Fig. 8 a multi-objective control scheme uses an H-infinity framework to synthesise a control unit (K) 110. The control scheme is tuned based on a singular value decomposition of a systems transfer matrix, this aims to improve comfort and road holding by minimising disturbance propagation.

The proposed control is sufficiently robust against measurement noise and leads to simultaneous and significant improvements in comfort and road holding related metrics. The robustness of the proposed control is highlighted by the fact that these improvements are achieved with both continuous and peak actuator limits as well as for different exogenous inputs. This control unit simultaneously addresses the low frequency tracking of the actuator 6 position and the higher frequency control of performance objectives through separated high-frequency feedback signals Hfs and low-frequency feedback signals Lfs measured from the nonlinear PALS full car. The low frequency tracking reference for actuator 6 position is provided by PID loops (one for each actuator unit) which address the lower frequency control objectives. In this way both the higher and lower frequency control objectives are addressed simultaneously and effectively according to a frequency separation principle.

This control unit 110 generates an equivalent force reference which is converted to the torque reference Tref for input into the actuator units 120a -n.

In this example, the external disturbances (dn) could be: vertical road velocity (di), the noise of the suspension deflection measurement (d2) and the sprung mass vertical acceleration (d3). The objectives to be minimised (en) are weighted sprung mass vertical acceleration (e1), tyre deflection (e2) and control effort (e3). Disturbance weighting functions (Wd1 - Wd3) uniform all disturbance inputs. The objective weighting functions (We1 - We3) penalise the importance of the different objectives. This may be used to attenuate the performance objectives at the chassis resonant frequency, as well as to penalise the control effort above the frequency of interest. The control effort penalization benefits the system with energy saving as well as high frequency noise attenuation.

The synthesised control unit may work as a bandwidth filter for both inputs of suspension deflection (y1) and the sprung mass vertical acceleration (y2) which take effect around human sensitive frequency ranges.

A discretized H-infinity controller may be realised to have a 0.005 second sampling period.

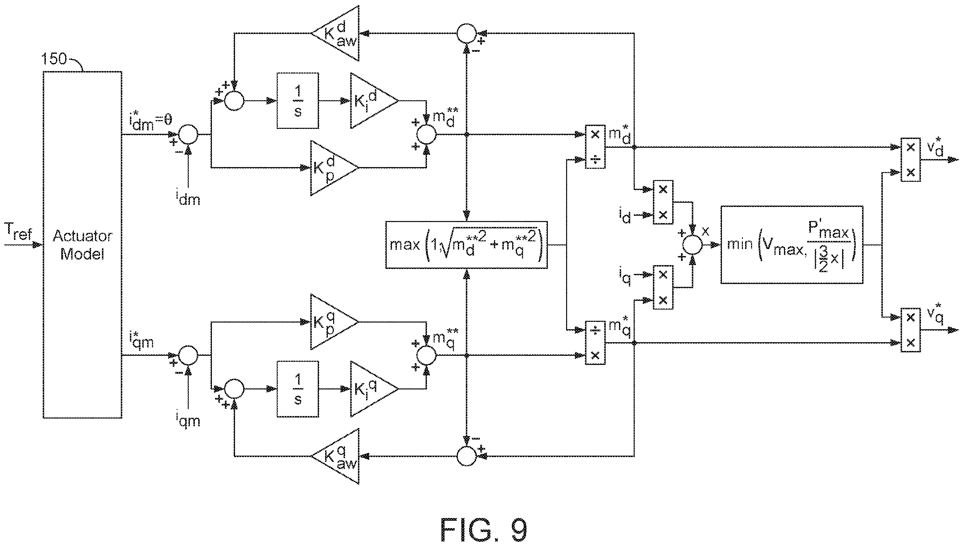

An example of a control loop 140a - n is shown in Fig. 9.

Referring to Fig. 9, the reference magnetising (quadrature) current *i*^{∗}*qₘ* is provided from the torque reference Tref based, for example, on an actuator model (150). The reference (direct) current *i*^{∗}*dₘ* is, in this example, set to zero, for reasons that are explained in detail below.

Irrespective of the actual control strategy used, there are numerous well established approaches for the calculation of the direct and quadrature (dq) current references for PMSM motors. Quantities expressed in the so called rotor dq reference frame are found by a transformation of the associated quantities in the reference frame of a three-phase abc wye-connected stator.

The known approaches include:
1. Constant torque angle control, or zero direct current control: this is the industry standard, easy to implement but with limited high speed performance as it does not include any flux weakening logic.
2. Unity power factor: low voltage requirements and extended constant torque region.
3. Constant mutual flux linkages control: smooth integration of control at low speeds and flux weakening at high speeds.
4. Angle control of air gap flux and current phasors: suitable for sensorless operation.
5. Optimum torque per unit current control: optimum utilisation of PMSM and drive.
6. Constant power loss control: maximum torque-speed envelope taking into account thermal robustness.
7. Maximum efficiency control: maximum efficiency and improved reliability.

In embodiments of the invention, overall system performance is limited mainly by the maximum torque that the actuator can deliver at low speeds. Thus, output speed maximisation is not particularly interesting and flux weakening approaches are not needed. Sensorless operation is not a requirement either, and energy efficiency, although important, is not critical.

For these reasons, in embodiments of the invention, the standard zero direct current control is used. This approach provides near optimum torque per ampere and an efficiency that is comparable to loss minimisation control strategies. The approach involves setting i^{∗}dₘ = o at all times, and controlling i^{∗}qₘ to achieve the desired output torque or linkage 15 motion.

Assuming an accurate model of the actuator, the current references required to provide the desired torque can be estimated based on the electrical and mechanical properties of the drive motor 6 and gearbox 10 on an open loop basis. Alternatively, the output torque could be measured and fed back, using PID control.

In Fig. 9, inputs from the motor 9 are the *dq* currents and their magnetising components: *id, iq, idₘ* and *iqₘ.* The *dq* voltage references *υ*^{∗}*d* and *υ*^{∗}*q* are output to the drive motor 9, for example to the DC-AC converter in the drive motor 9 (not shown). Proportional, integral and anti - windup gains are denoted by subscripts p, i and aw. *dq* components are denoted by subscripts or superscripts and *q.*

## Claims

1. A suspension system (1) for a vehicle comprising:
a pivotable control arm (2) having a first end (3) connectable to a wheel carrier and a second end (4) connectable to an inboard component (5) of the vehicle;
a rotary actuator (6); and
a linkage (15) connecting the rotary actuator (6) to the control arm (2), so that torque applied to the linkage (15) by the rotary actuator (6) is translated into a force which acts on the control arm (2) to pivot the control arm (2) and a wheel carrier connected to said first end (3), relative to said inboard component (5) of the vehicle;
wherein the rotary actuator (6) comprises an output shaft (14) and the linkage (15) comprises a torque transfer arm (16) attached to the output shaft (14) and a pushrod (17) to connect the torque transfer arm (16) to the control arm (2);
wherein the rotary actuator (6) comprises a housing (11) mountable to an inboard component of the vehicle; and
wherein the torque transfer arm (16) comprises an axle (25) rotatably mounted in the housing (11) by a bearing (27) located in the housing (11) on either side of a slot (31) in the housing (11), the torque transfer arm (16) extending from said slot (31).

2. A suspension system according to claim 1, wherein the pushrod (17) has an upper end pivotally connected to the torque transfer arm (16) and a lower end pivotally connected to the control arm (2).

3. A suspension system according to claim 2, wherein the rotary actuator comprises a drive motor (9) and a gearbox, the gearbox (10) being configured to cause a step change in the torque transmitted from the drive motor to the output shaft.

4. A suspension system according to any preceding claim further comprising:
a wheel carrier (42); and
a telescopic strut (41) having a top mount connectable at an upper end of the strut to an inboard component of the vehicle and a lower joint (43) to connect a lower end of the strut to the wheel carrier;
wherein a line between the top mount and the lower joint defines a steering axis of the wheel carrier.

5. A suspension system according to claim 4, wherein the first end of the control arm is connected to the wheel carrier (42).

6. A suspension system according to claim 4 or 5, further comprising a coil spring (45) arranged coaxially around the telescopic strut (41).

7. A suspension system according to claim 1, wherein the pivotable control arm is a pivotable lower control arm (33) and the system further comprises:
a wheel carrier;
a pivotable upper control arm having a first end connected to the wheel carrie (42) and a second end connectable to an inboard component of the vehicle; and
a telescopic strut having a lower joint (36) to pivotally connect a lower end of the strut to the lower control arm and an upper end connectable to an inboard component of the vehicle.

8. A suspension system according to claim 7, when dependent on claim 2, wherein the telescopic strut (41) and the pushrod (17) share a common pivot axis about which said strut and said pushrod both pivot relative to the lower control arm.

9. A suspension system according to claim 8 further comprising a coil spring (45) arranged coaxially around the telescopic strut (41).

10. A vehicle comprising a suspension system (1) according to any one of the preceding claims.

11. A control system for a vehicle as claimed in claim 10, the control system comprising:
a torque control unit (110); and
a torque control loop;
wherein in response to receiving information relating to a state of the vehicle and/or the road, the torque control unit is arranged to provide a torque reference to the torque control loop, the torque control loop being arranged to convert the torque reference into signals for driving the rotary actuator (6).

12. The control system of claim 11, wherein the torque control unit (110) is further arranged to receive information regarding a desired suspension condition and to calculate the torque reference based on the state of the vehicle and/or the road and the desired suspension condition.

13. The control system of claim 12, wherein the torque control unit comprises an H-infinity outer loop configured to improve comfort and road holding by minimising disturbance propagation, and PID outer loops configured to improve attitude motions, where the H-infinity and PID outer loops are working together according to a frequency separation principle.

14. A method of operating a suspension system as claimed in any one of claims 1 to 9, comprising:
determining a torque reference based on a desired suspension condition; and
using the torque reference to calculate a torque to be applied to the linkage (15) by the actuator.

15. The method of claim 14, comprising converting the torque reference to a current value for the actuator, wherein the actuator comprises a drive motor.

## Patentansprüche

1. Aufhängungssystem (1) für ein Fahrzeug, das Folgendes umfasst:
einen schwenkbaren Querlenker (2) mit einem ersten Ende (3), das mit einem Radträger verbindbar ist, und einem zweiten Ende (4), das mit einer innenliegenden Komponente (5) des Fahrzeugs verbindbar ist;
einen Drehaktor (6); und
ein Gestänge (15), das den Drehaktor (6) mit dem Querlenker (2) verbindet, sodass ein durch den Drehaktor (6) auf das Gestänge (15) ausgeübtes Drehmoment in eine Kraft umgesetzt wird, die auf den Querlenker (2) wirkt, um den Querlenker (2) und einen mit dem ersten Ende (3) verbundenen Radträger relativ zu der innenliegenden Komponente (5) des Fahrzeugs zu schwenken;
wobei der Drehaktor (6) eine Ausgangswelle (14) umfasst und das Gestänge (15) einen an der Ausgangswelle (14) angebrachten Drehmomentübertragungsarm (16) und eine Druckstange (17) zum Verbinden des Drehmomentübertragungsarms (16) mit dem Querlenker (2) umfasst;
wobei der Drehaktor (6) ein Gehäuse (11) umfasst, das an einer innenliegenden Komponente des Fahrzeugs befestigbar ist; und
wobei der Drehmomentübertragungsarm (16) eine Achse (25) umfasst, die durch ein Lager (27) drehbar in dem Gehäuse (11) befestigt ist, das sich auf einer beliebigen Seite einer Aussparung (31) in dem Gehäuse (11) in dem Gehäuse (11) befindet, wobei sich der Drehmomentübertragungsarm (16) von der Aussparung (31) erstreckt.

2. Aufhängungssystem nach Anspruch 1, wobei die Druckstange (17) ein oberes Ende, das schwenkbar mit dem Drehmomentübertragungsarm (16) verbunden ist, und ein unteres Ende, das schwenkbar mit dem Querlenker (2) verbunden ist, aufweist.

3. Aufhängungssystem nach Anspruch 2, wobei der Drehaktor einen Antriebsmotor (9) und ein Getriebe umfasst, wobei das Getriebe (10) dazu konfiguriert ist, eine markante Änderung des von dem Antriebsmotor auf die Ausgangswelle übertragenen Drehmoments zu bewirken.

4. Aufhängungssystem nach einem der vorangehenden Ansprüche, das ferner Folgendes umfasst:
einen Radträger (42); und
eine Teleskopstrebe (41) mit einer oberen Befestigung, die an einem oberen Ende der Strebe mit einer innenliegenden Komponente des Fahrzeugs verbindbar ist, und einem unteren Gelenk (43) zum Verbinden eines unteren Endes der Strebe mit dem Radträger;
wobei eine Linie zwischen der oberen Befestigung und dem unteren Gelenk eine geometrische Lenkachse des Radträgers definiert.

5. Aufhängungssystem nach Anspruch 4, wobei das erste Ende des Querlenkers mit dem Radträger (42) verbunden ist.

6. Aufhängungssystem nach Anspruch 4 oder 5, ferner umfassend eine Spiralfeder (45), die koaxial um die Teleskopstrebe (41) angeordnet ist.

7. Aufhängungssystem nach Anspruch 1, wobei es sich bei dem schwenkbaren Querlenker um einen schwenkbaren unteren Querlenker (33) handelt und das System ferner Folgendes umfasst:
einen Radträger;
einen schwenkbaren oberen Querlenker mit einem ersten Ende, das mit dem Radträger (42) verbunden ist, und einem zweiten Ende, das mit einer innenliegenden Komponente des Fahrzeugs verbindbar ist; und
eine Teleskopstrebe mit einem unteren Gelenk (36) zum schwenkbaren Verbinden eines unteren Endes der Strebe mit dem unteren Querlenker und einem oberen Ende, das mit einer innenliegenden Komponente des Fahrzeugs verbindbar ist.

8. Aufhängungssystem nach Anspruch 7, wenn abhängig von Anspruch 2, wobei die Teleskopstrebe (41) und die Druckstange (17) eine gemeinsame geometrische Schwenkachse aufweisen, um welche die Strebe und die Druckstange beide relativ zu dem unteren Querlenker schwenken.

9. Aufhängungssystem nach Anspruch 8, ferner umfassend eine Spiralfeder (45), die koaxial um die Teleskopstrebe (41) angeordnet ist.

10. Fahrzeug, das ein Aufhängungssystem (1) nach einem der vorangehenden Ansprüche umfasst.

11. Steuersystem für ein Fahrzeug nach Anspruch 10, wobei das Steuersystem Folgendes umfasst:
ein Drehmomentsteuereinheit (110); und
eine Drehmomentsteuerschleife;
wobei, als Reaktion auf das Empfangen von einen Zustand des Fahrzeugs und/oder der Straße betreffenden Informationen, die Drehmomentsteuereinheit dazu angeordnet ist, der Drehmomentsteuerschleife einen Drehmomentbezugswert bereitzustellen, wobei die Drehmomentsteuerschleife dazu angeordnet ist, den Drehmomentbezugswert in Signale zum Antreiben des Drehaktors (6) umzuwandeln.

12. Steuersystem nach Anspruch 11, wobei die Drehmomentsteuereinheit (110) ferner dazu angeordnet ist, eine gewünschte Aufhängungsbedingung betreffende Informationen zu empfangen und den Drehmomentbezugswert basierend auf dem Zustand des Fahrzeugs und/oder der Straße und der gewünschten Aufhängungsbedingung zu berechnen.

13. Steuersystem nach Anspruch 12, wobei die Drehmomentsteuereinheit eine äußere H-Infinity-Schleife, die dazu konfiguriert ist, den Komfort und die Straßenlage durch Minimieren der Störungsfortpflanzung zu verbessern, und äußere PID-Schleifen, die dazu konfiguriert sind, Lagebewegungen zu verbessern, umfasst, wobei die äußeren H-Infinity- und PID-Schleifen gemäß einem Frequenztrennungsprinzip zusammenarbeiten.

14. Verfahren zum Betreiben eines Aufhängungssystems nach einem der Ansprüche 1 bis 9, umfassend:
Bestimmen eines Drehmomentbezugswerts basierend auf einer gewünschten Aufhängungsbedingung; und
Verwenden des Drehmomentbezugswerts zum Berechnen eines durch den Aktor auf das Gestänge (15) auszuübenden Drehmoments.

15. Verfahren nach Anspruch 14, umfassend das Umwandeln des Drehmomentbezugswerts in einen Stromwert für den Aktor, wobei der Aktor einen Antriebsmotor umfasst.

## Revendications

1. Système de suspension (1) pour un véhicule, comprenant :
un bras de suspension pivotant (2) ayant une première extrémité (3) qui peut être reliée à un support de roue et une deuxième extrémité (4) qui peut être reliée à un composant intérieur (5) du véhicule ;
un actionneur rotatif (6) ; et
une tringlerie (15) qui relie l'actionneur rotatif (6) au bras de suspension (2) de telle façon que le couple appliqué à la tringlerie (15) par l'actionneur rotatif (6) est traduit en une force qui agit sur le bras de suspension (2) pour faire pivoter le bras de suspension (2) et un support de roue relié à ladite première extrémité (3) par rapport audit composant intérieur (5) du véhicule ;
dans lequel l'actionneur rotatif (6) comprend un arbre de sortie (14) et la tringlerie (15) comprend un bras de transfert de couple (16) fixé à l'arbre de sortie (14) et une tige de poussée (17) pour relier le bras de transfert de couple (16) au bras de suspension (2) ;
dans lequel l'actionneur rotatif (6) comprend un boîtier (11) qui peut être monté sur un composant intérieur du véhicule ; et
dans lequel le bras de transfert de couple (16) comprend un axe (25) monté en rotation dans le boîtier (11) par un palier (27) situé dans le boîtier (11) de chaque côté d'une fente (31) dans le boîtier (11), le bras de transfert de couple (16) s'étendant depuis ladite fente (31) .

2. Système de suspension selon la revendication 1, dans lequel la tige de poussée (17) a une extrémité supérieure reliée de manière pivotante au bras de transfert de couple (16) et une extrémité inférieure reliée de manière pivotante au bras de suspension (2).

3. Système de suspension selon la revendication 2, dans lequel l'actionneur rotatif comprend un moteur d'entraînement (9) et un réducteur, le réducteur (10) étant configuré pour provoquer un changement d'étage dans le couple transmis par le moteur d'entraînement à l'arbre de sortie.

4. Système de suspension selon l'une quelconque des revendications précédentes, comprenant en outre :
un support de roue (42) ; et
une jambe télescopique (41) ayant une fixation supérieure qui peut être reliée à une extrémité supérieure de la jambe à un composant intérieur du véhicule et une articulation inférieure (43) pour relier une extrémité inférieure de la jambe au support de roue ;
dans lequel une ligne entre la fixation supérieure et l'articulation inférieure définit un axe de direction du support de roue.

5. Système de suspension selon la revendication 4, dans lequel la première extrémité du bras de suspension est reliée au support de roue (42).

6. Système de suspension selon la revendication 4 ou la revendication 5, comprenant en outre un ressort hélicoïdal (45) disposé coaxialement autour de la jambe télescopique (41) .

7. Système de suspension selon la revendication 1, dans lequel le bras de suspension pivotant est un bras de suspension pivotant inférieur (33) et le système comprend en outre :
un support de roue ;
un bras de suspension pivotant supérieur ayant une première extrémité reliée au support de roue (42) et une deuxième extrémité qui peut être reliée à un composant intérieur du véhicule ; et
une jambe télescopique ayant une articulation inférieure (36) pour relier de manière pivotante une extrémité inférieure de la jambe au bras de suspension inférieur et une extrémité supérieure qui peut être reliée à un composant intérieur du véhicule.

8. Système de suspension selon la revendication 7 lorsqu'elle dépend de la revendication 2, dans lequel la jambe télescopique (41) et la tige de poussée (17) partagent un axe de pivot commun autour duquel ladite jambe et ladite tige de poussée pivotent l'une et l'autre par rapport au bras de suspension inférieur.

9. Système de suspension selon la revendication 8, comprenant en outre un ressort hélicoïdal (45) disposé coaxialement autour de la jambe télescopique (41).

10. Véhicule comprenant un système de suspension (1) selon l'une quelconque des revendications précédentes.

11. Système de commande pour un véhicule selon la revendication 10, le système de commande comprenant :
une unité de commande de couple (110) ; et
une boucle de commande de couple ;
dans lequel, en réponse à la réception d'une information relative à un état du véhicule et/ou de la route, l'unité de commande de couple est conçue pour fournir une référence de couple à la boucle de commande de couple, la boucle de commande de couple étant conçue pour convertir la référence de couple en signaux d'excitation de l'actionneur rotatif (6).

12. Système de commande selon la revendication 11, dans lequel l'unité de commande de couple (110) est en outre conçue pour recevoir une information concernant une condition voulue de la suspension et pour calculer la référence de couple en fonction de l'état du véhicule et/ou de la route et de la condition voulue de la suspension.

13. Système de commande selon la revendication 12, dans lequel l'unité de commande de couple comprend une boucle extérieure en H infini, configurée pour améliorer le confort et la tenue de route en minimisant la propagation des perturbations, et des boucles extérieures PID configurées pour améliorer les mouvements d'attitude, où les boucles extérieures en H infini et PID travaillent ensemble selon un principe de séparation de fréquences.

14. Procédé de fonctionnement d'un système de suspension selon l'une quelconque des revendications 1 à 9, comprenant :
la détermination d'une référence de couple basée sur une condition voulue de la suspension ; et
l'utilisation de la référence de couple pour calculer un couple à appliquer à la tringlerie (15) par l'actionneur.

15. Procédé selon la revendication 14, comprenant la conversion de la référence de couple en une valeur de courant pour l'actionneur, dans lequel l'actionneur comprend un moteur d'entraînement.
